(19) 

Europäisches Patentamt
European Patent Office
Office européen des brevets

(11) **EP 4 730 273 A1**

(12) **EUROPEAN PATENT APPLICATION**
published in accordance with Art. 153(4) EPC

(43) Date of publication:
**22.04.2026 Bulletin 2026/17**

(21) Application number: **24840688.6**

(22) Date of filing: **26.08.2024**

(51) International Patent Classification (IPC):
**G06V 10/82** (2022.01)   **G06V 10/70** (2022.01)
**G06V 40/40** (2022.01)

(52) Cooperative Patent Classification (CPC):
**G06V 40/45; G06V 10/82; G06V 10/87**

(86) International application number:
**PCT/CN2024/114522**

(87) International publication number:
**WO 2026/044450 (05.03.2026 Gazette 2026/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **SHENZHEN GOODIX TECHNOLOGY
CO., LTD.**
**Shenzhen, Guangdong 518045 (CN)**

(72) Inventors:
• **GU, Qin**
  **Shenzhen, Guangdong 518045 (CN)**
• **LI, Hongsheng**
  **Shenzhen, Guangdong 518045 (CN)**

• **CHEN, Juan**
  **Shenzhen, Guangdong 518045 (CN)**
• **HE, Jingwei**
  **Shenzhen, Guangdong 518045 (CN)**
• **QIU, Kang**
  **Shenzhen, Guangdong 518045 (CN)**
• **LU, Yifu**
  **Shenzhen, Guangdong 518045 (CN)**
• **CHEN, Feifei**
  **Shenzhen, Guangdong 518045 (CN)**
• **FENG, Jilan**
  **Shenzhen, Guangdong 518045 (CN)**

(74) Representative: **Kraus & Lederer PartGmbB
Thomas-Wimmer-Ring 15
80539 München (DE)**

(54) **FINGERPRINT DETECTION METHOD AND APPARATUS, PROGRAM PRODUCT, AND STORAGE MEDIUM**

(57) Embodiments of the present application provide a fingerprint detection method and apparatus, a program product, and a storage medium. The method includes: obtaining native domain information of a to-be-detected fingerprint, where the native domain information is original data collected when the to-be-detected fingerprint is verified; executing fingerprint feature extraction on the native domain information to obtain a fingerprint feature matrix of the to-be-detected fingerprint; executing a classification operation on the fingerprint feature matrix through a trained medium classification network to obtain a fingerprint medium classification vector of the to-be-detected fingerprint, where the fingerprint medium classification vector is used for representing, in a vector form, a probability that the to-be-detected fingerprint belongs to a plurality of medium types respectively; and determining a medium type of the to-be-detected fingerprint based on the fingerprint medium classification vector. The present application solves the problem that the type of a fingerprint medium cannot be effectively detected in related technologies.

Fig. 2

**Description**

TECHNICAL FIELD

Embodiments of the present application relate to the field of fingerprint detection, and specifically, to a fingerprint detection method and apparatus, a program product, and a storage medium.

BACKGROUND

At present, in existing technologies, real-time physical characteristics such as acoustic impedance and surface distance are explicitly computed and manually fitted through ultrasonic echo signals to identify fingerprint patterns, so as to identify real and fake fingerprints. This method can only identify the authenticity of fingerprints, but cannot detect the type of a medium where the fingerprints are located, and therefore, is not conducive to further analysis of fingerprint identification.
In view of the above problems, no effective solution has been provided at present.

SUMMARY

The embodiments of the present application provide a fingerprint detection method and apparatus, a program product, and a storage medium, to at least solve the problem that the type of a fingerprint medium cannot be effectively detected in related technologies.
According to an embodiment of the present application, a fingerprint detection method is provided, including: obtaining native domain information of a to-be-detected fingerprint, where the native domain information is original data collected when the to-be-detected fingerprint is verified; executing fingerprint feature extraction on the native domain information to obtain a fingerprint feature matrix of the to-be-detected fingerprint; executing a classification operation on the fingerprint feature matrix through a trained medium classification network to obtain a fingerprint medium classification vector of the to-be-detected fingerprint, where the fingerprint medium classification vector is used for representing, in a vector form, a probability that the to-be-detected fingerprint belongs to a plurality of medium types respectively; and determining a medium type of the to-be-detected fingerprint based on the fingerprint medium classification vector.
In an exemplary embodiment, before executing a classification operation on the fingerprint feature matrix through a trained medium classification network to obtain a fingerprint medium classification vector of the to-be-detected fingerprint, the method further includes: collecting native domain information of emulated fingerprints emulated on a plurality of types of media respectively to obtain a set of emulated fingerprint native domain information of a plurality of types of emulated fingerprints, where the set of emulated fingerprint native domain information of the plurality of types of emulated fingerprints includes: a plurality of pieces of emulated fingerprint native domain information of an identical medium emulated fingerprint obtained after multiple times of information collection on the identical medium emulated fingerprints; executing fingerprint feature extraction on each piece of the emulated fingerprint native domain information included in the set of emulated fingerprint native domain information of the plurality of types of emulated fingerprints to obtain a set of emulated fingerprint feature matrices of the plurality of types of emulated fingerprints and training the medium classification network using the set of emulated fingerprint feature matrices and classification labels for the plurality of types of media to obtain the medium classification network, where the classification labels are used for representing media types of the plurality of types of media.
In an exemplary embodiment, the training a pre-training medium classification network using the set of emulated fingerprint feature matrices and the classification labels for the plurality of types of media to obtain the trained medium classification network includes: inputting the set of emulated fingerprint feature matrices into the medium classification network for a training operation, where the training operation includes: inputting the emulated fingerprint feature matrices into a feature extraction layer included in the medium classification network, outputting feature vectors of the emulated fingerprint feature matrices by the feature extraction layer, inputting the feature vectors of the emulated fingerprint feature into a classification layer included in the medium classification network, calculating, by the classification layer, probabilities that the feature vectors of the emulated fingerprint feature matrices belongs to the classification labels for the plurality of media, and outputting medium classification vectors; determining, based on the medium classification vectors and the classification labels for the media, a loss value output by a loss function of the medium classification network; and ending the training when the loss value satisfies a preset training end condition, to obtain the trained medium classification network; or adjusting parameter values of the medium classification network when the loss value does not satisfy the preset training end condition, to reduce the loss value output by the loss function of the medium classification network in next training.
In an exemplary embodiment, after inputting the set of emulated fingerprint feature matrices into the medium classification network for a training operation, the method further includes: extracting a feature vector of each emulated fingerprint feature matrix included in the set of emulated fingerprint feature matrices output by the feature extraction layer;

mapping the feature vector of each emulated fingerprint feature matrix to a coordinate space of a preset dimension, and performing dimensionality reduction on the feature vector of each emulated fingerprint feature matrix in the coordinate space to obtain a feature vector of a target dimension; and visualizing the feature vector of the target dimension of each emulated fingerprint feature matrix to display on a target interface.

In an exemplary embodiment, the executing fingerprint feature extraction on the native domain information to obtain a fingerprint feature matrix of the to-be-detected fingerprint includes: building a set of native domain information, where the set of native domain information includes a plurality of pieces of native domain information of the to-be-detected fingerprint obtained within a current time period, or the set of native domain information includes a plurality of pieces of historical native domain information obtained within a historical time period and the native domain information obtained within the current time period; converting the native domain information included in the set of native domain information into digital signals by the signal converter to obtain a plurality of groups of digital signals; extracting digital features from each of the groups of digital signals to obtain fingerprint features of each of the groups of native domain information; generating a matrix including the fingerprint features of each of the groups of native domain information according to signal collection channels of a target sensor that obtains the native domain information included in the set of native domain information, to obtain a plurality of groups of fingerprint feature matrices; and combining the plurality of groups of fingerprint feature matrices to obtain the to-be-detected fingerprint feature matrix.

In an exemplary embodiment, the executing a classification operation on the fingerprint feature matrix through a trained medium classification network to obtain a fingerprint medium classification vector of the to-be-detected fingerprint includes: inputting the to-be-detected fingerprint feature matrix into the feature extraction layer included in the medium classification network, and extracting a feature vector of each group of fingerprint feature matrix included in the to-be-detected fingerprint feature matrix by the feature extraction layer; inputting the feature vector of each group of fingerprint feature matrix output by the feature extraction layer into the classification layer included in the medium classification network, and calculating, by the classification layer, a probability that the feature vector of each group of fingerprint feature matrix belongs to the classification labels for the plurality of types of media; and combining the plurality of classification vectors output by the classification layers to obtain the fingerprint medium classification vector.

According to another embodiment of the present application, a fingerprint detection apparatus is provided, including: a first obtaining module, configured to obtain native domain information of a to-be-detected fingerprint, where the native domain information is original data collected when the to-be-detected fingerprint is verified; a first extraction module, configured to execute fingerprint feature extraction on the native domain information to obtain a fingerprint feature matrix of the to-be-detected fingerprint; a first classification module, configured to execute a classification operation on the fingerprint feature matrix through a trained medium classification network to obtain a fingerprint medium classification vector of the to-be-detected fingerprint, where the fingerprint medium classification vector is used for representing, in a vector form, a probability that the to-be-detected fingerprint belongs to a plurality of medium types respectively; and a first determining module, configured to determine a medium type of the to-be-detected fingerprint based on the fingerprint medium classification vector.

According to still another embodiment of the present application, a computer program product is further provided, including a computer program that, when executed by a processor, implements the steps of any of the method embodiments described above.

According to still another embodiment of the present application, a computer-readable storage medium is further provided, where the computer-readable storage medium stores a computer program configured to execute the steps of any of the method embodiments described above at runtime.

According to still another embodiment of the present application, an electronic device is further provided, including a memory and a processor, where the memory stores a computer program, and the processor is configured to run the computer program to execute the steps of any of the method embodiments described above.

In the embodiments of the present application, native domain information of the to-be-detected fingerprint is obtained, fingerprint feature extraction is executed on the native domain information to obtain a fingerprint feature matrix, a classification operation is executed on the feature matrix through the trained medium classification network to obtain a medium classification vector, and finally, a medium type of the to-be-detected fingerprint is analyzed based on the medium classification vector. By the classification operation using the trained medium classification network on the fingerprint feature matrix, a more accurate and high-quality medium classification vector can be generated, thereby improving the accuracy and efficiency of identifying the medium type of the to-be-detected fingerprint and effectively detecting the types of fingerprint media. The technical effect of accurately and quickly identifying the type of a fingerprint medium is achieved, thereby solving the problem that the type of a fingerprint medium cannot be effectively detected in related technologies.

BRIEF DESCRIPTION OF DRAWINGS

Fig. 1 is a schematic diagram of an application environment of a fingerprint detection method according to an embodiment of the present application;

Fig. 2 is a flowchart of a fingerprint detection method according to an embodiment of the present application;

Fig. 3 is a schematic diagram of a structure of a medium classification network according to an embodiment of the present application;

Fig. 4 is a schematic diagram of a specific structure of the medium classification network according to an embodiment of the present application;

Fig. 5 is a visual scatter plot according to an embodiment of the present application;

Fig. 6 is a flowchart of building a CNN model according to an embodiment of the present application;

Fig. 7 is a block diagram of a structure of a fingerprint detection apparatus according to an embodiment of the present application;

Fig. 8 is a schematic diagram of a structure of a product for determining fingerprint medium types according to an embodiment of the present application; and

Fig. 9 is a schematic diagram of a structure of an electronic device according to an embodiment of the present application.

DETAILED DESCRIPTION

The embodiments of the present application will be described in detail below with reference to the accompanying drawings and in combination with embodiments.

It should be noted that the terms "first", "second", and the like in the description, claims, and accompanying drawings of the present application are used for distinguishing similar objects and do not need to be used for describing a specific order or sequence.

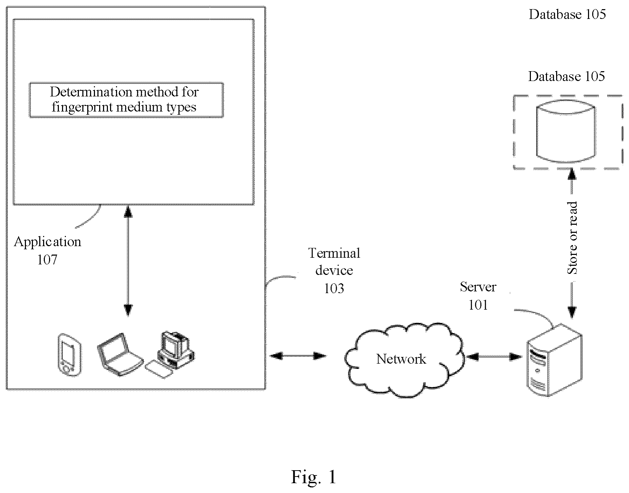

According to one aspect of the embodiments of the present application, a fingerprint detection method is provided. Optionally, in this embodiment, the fingerprint detection method may be applied to a hardware environment constituted by a server 101 and a terminal device 103 as shown in Fig. 1. As shown in Fig. 1, the server 101 is connected to the terminal 103 through a network and may be configured to provide services for the terminal device or applications installed in the terminal device. The applications may be video applications, instant messaging applications, browser applications, educational applications, game applications, and the like. A database 105 may be configured in the server or independent of the server to provide data storage services for the server 101, such as a game data storage server. The network may include but is not limited to a wired network or a wireless network. The wired network includes: a local area network, a metropolitan area network, or a wide area network. The wireless network includes: Bluetooth, WIFI, or other networks to achieve wireless communications. The terminal device 103 may be a terminal configured with applications, and may include but not limited to at least one of the following: a mobile phone (such as an Android phone or an iOS phone), a laptop, a tablet, a palm computer, MID (Mobile Internet Devices), PAD, a desktop computer, a smart television, a smart voice interaction device, a smart home appliance, a vehicle terminal, an aircraft, a virtual reality (VR) terminal, an augmented reality (AR) terminal, a mixed reality (MR) terminal, and other computer devices. The server may be a single server, a server cluster composed of a plurality of servers, or a cloud server.

As shown in Fig. 1, the foregoing fingerprint detection method may be implemented in the terminal device 103 through the following steps:

S1: Obtain native domain information of a to-be-detected fingerprint, where the native domain information is original data collected when the to-be-detected fingerprint is verified.

S2: Execute fingerprint feature extraction on the native domain information to obtain a fingerprint feature matrix of the to-be-detected fingerprint.

S3: Execute a classification operation on the fingerprint feature matrix through a trained medium classification network to obtain a fingerprint medium classification vector of the to-be-detected fingerprint, where the fingerprint medium classification vector is used for representing, in a vector form, probabilities that the to-be-detected fingerprint belongs to a plurality of medium types respectively.

S4: Determine a medium type of the to-be-detected fingerprint based on the fingerprint medium classification vector.

Optionally, in this embodiment, the foregoing fingerprint detection method may alternatively be implemented by a server, such as in the server 101 shown in Fig. 1, or jointly implemented by a terminal device and a server.

It should be noted that the foregoing server may be an independent physical server, a server cluster or distributed system composed of a plurality of physical servers, or a cloud server that provides basic cloud computing services such as cloud services, cloud databases, cloud computing, cloud functions, cloud storage, network services, cloud communication, middleware services, domain name services, security services, CDN, big data, and artificial intelligence platforms. The terminal may be a smart phone, a tablet, a laptop, a desktop computer, a smart speaker, a smart watch, or the like, but is not limited thereto. The terminal and the server may be directly or indirectly connected through wired or wireless communication, which is not limited here in the present application.

The above is only an example, and this embodiment is not specifically limited.

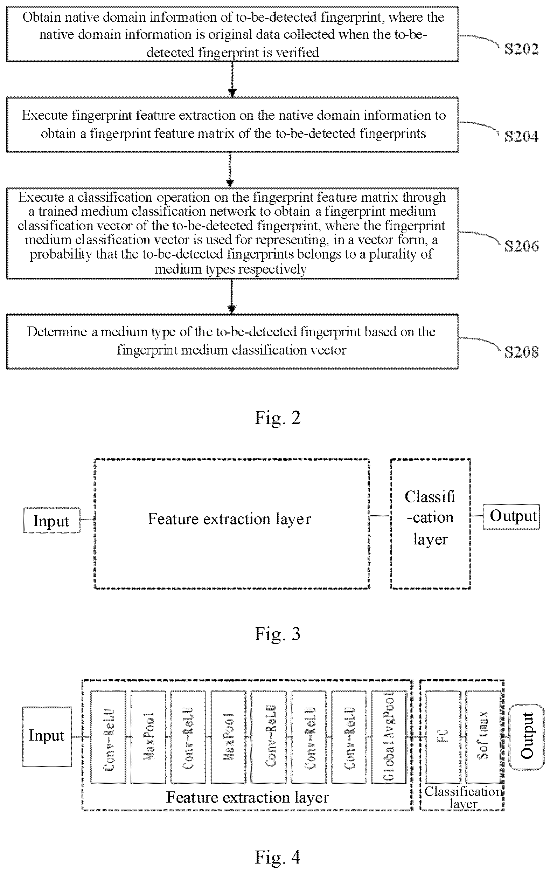

In this embodiment, a fingerprint detection method is provided. Fig. 2 is a flowchart of a fingerprint detection method according to an embodiment of the present application. As shown in Fig. 2, the flow includes the following steps: Step S202: Obtain native domain information of a to-be-detected fingerprint, where the native domain information is original data collected when the to-be-detected fingerprint is verified.

Optionally, the to-be-detected fingerprint in this embodiment may be a fingerprint emulated on a target medium. This embodiment may obtain the native domain information of the to-be-detected fingerprint emulated on the target medium by at least one of the following methods: Optical scanning method: the to-be-detected fingerprint emulated on the target medium are scanned using an optical scanner, and a fingerprint image of the to-be-detected fingerprint is converted into a digital signal. Capacitive scanning method: fingerprint information is obtained by detecting changes in capacitance between a sensor and the to-be-detected fingerprint emulated on the target medium. Piezoelectric scanning method: fingerprint information is obtained by detecting changes in pressure applied to a sensor by the target medium. Ultrasonic scanning method: fingerprint information of the to-be-detected fingerprint emulated on the target medium is obtained by transmitting and receiving ultrasonic waves. Thermal imaging scanning method: fingerprint information is obtained by detecting temperature changes on the surface of the target medium. Radio frequency scanning method: fingerprint information of the to-be-detected fingerprint emulated on the target medium is obtained by transmitting radio frequency signals and receiving reflected signals. Multispectral scanning method: fingerprint information of the to-be-detected fingerprint emulated on the target medium is obtained by using light of different wavelengths.

Optionally, the material of the target medium in this embodiment includes, but is not limited to, gel, polyurethane (PU), latex, silica gel, acrylic, and resin. Simulating the to-be-detected fingerprint on the target medium refers to creating a replica on the target medium that has similar features to the original fingerprints. For example, in the same environment, different media processes such as gelation, PU, latex, silicon, acrylic, and resin are used to produce fake fingerprints corresponding to real fingers.

Optionally, in the process of collecting the to-be-detected fingerprint, the original data refers to unprocessed fingerprint information obtained by a fingerprint collection device. The original data includes but is not limited to the following information: fingerprint pattern, fingerprint direction, fingerprint size, fingerprint image quality, collection time, collection device information, and other biometric information (such as finger thickness and temperature). For example, an image of fingerprints is obtained using an optical fingerprint collector by scanning the fingerprints disposed on silica gel. These image data are the native domain information. They capture features such as fingerprint texture, ridges, and sweat holes. A capacitive sensor collects fingerprints by detecting changes in capacitance between a silicone finger and the surface of the sensor. These capacitance change data reflect the distribution of ridges and valleys of the fingerprints, and constitute the native domain information.

Step S204: Execute fingerprint feature extraction on the native domain information to obtain a fingerprint feature matrix of the to-be-detected fingerprint.

Optionally, this embodiment can execute fingerprint feature extraction on the native domain information by the following method to obtain a fingerprint feature matrix: performing a signal conversion operation on the native domain information through a signal converter to obtain a group of digital signals of the native domain information; extracting digital features from the group of digital signals to obtain a group of digital features of the native domain information; and determining a digital matrix of the native domain information as a group of digital features including the native domain information.

In this embodiment, the signal converter is a device that converts different types of signals into another type of signals, such as conversion between analog signals and digital signals or signal conversion of different frequencies or encoding methods. The signal conversion on the native domain information may be conversion by the following way: A type of the native domain information is determined for whether it is a type of analog signals or digital signals or other forms of information. An appropriate signal converter is selected according to the type of the native domain information. For example, if analog signals are converted into digital signals, an analog-to-digital converter is required, and relevant parameters of the converter, such as sampling rate, resolution, and filtering, are configured according to the characteristics and requirements of the analog signals. The native domain information is input into the signal converter for the signal conversion operation. After the conversion is completed, the signal converter outputs a group of digital signals that are digital representations of the native domain information.

For example, an image of the to-be-detected fingerprint is obtained using a capacitive sensor. The image includes detailed information such as ridges and valleys of the fingerprints. The signal conversion using the signal converter on the fingerprint image includes mathematical methods such as Fourier transform and wavelet transform, to convert image information into a group of digital signals. These digital signals include feature information of the to-be-detected fingerprint. Digital features are extracted from the digital signals obtained by conversion. These features may be the ridge direction, ridge frequency, ridge curvature, and the like of the fingerprints. The extracted digital features are arranged in an order to form a digital matrix. This matrix includes all key information of the to-be-detected fingerprint. By the above way, signal conversion, digital feature extraction, and digital matrix building on the to-be-detected fingerprint can be implemented, thereby providing a key information foundation for target medium type identification.

In this embodiment, the fingerprint feature matrix is digital matrix data obtained by using the sensor to complete signal analog-to-digital conversion. Without pre-processing, the corresponding fingerprint information may not be directly observed by naked eyes. However, the fingerprint feature matrix includes all original information that has not been filtered out, making it more suitable for matching deep learning technology for automatic feature extraction.

Step S206: Execute a classification operation on the fingerprint feature matrix through a trained medium classification network to obtain a fingerprint medium classification vector of the to-be-detected fingerprint, where the fingerprint medium classification vector is used for representing, in a vector form, a probability that the to-be-detected fingerprint belongs to a plurality of medium types respectively.

Optionally, the medium classification network includes but is not limited to various types of neural networks, such as convolutional neural networks (CNN), recurrent neural networks (RNN), long-short term memory (LSTM), and graph neural networks (GNN). For example, when the medium classification network is a CNN, the structure of the medium classification network includes but is not limited to the network structure shown in Fig. 3, including: a feature extraction layer and a classification layer. The CNN inputs the fingerprint feature matrix into the feature extraction layer, the feature extraction layer outputs the feature vector of the fingerprint feature matrix to the classification layer, and the classification layer calculates a probability that the feature vector of the fingerprint feature matrix belongs to classification labels of a plurality of media, and outputs a fingerprint medium classification vector.

Optionally, the feature extraction layer may include a plurality of sub network layers. For example, when the medium classification network is a CNN, the feature extraction layer consists of a Conv layer (convolutional layer), a ReLU activation layer, a MaxPool (max pooling) layer, and a GlobalAvgPool (global pooling) layer. The Conv layer is used for extracting image features. The ReLU activation layer implements a non-linear activation function used for introducing non-linearity into the neural network, so that the network can learn and simulate more complex functions. The MaxPool layer is used for reducing the spatial size of features output by the convolutional layer, thereby reducing the quantity of parameters and computational complexity and making feature detection more robust. The GlobalAvgPool layer implements a special pooling operation that averagely pools the entire features. The quantity and stacking of the Conv layer, the ReLU activation layer, the MaxPool layer, and the GlobalAvgPool layer in the feature extraction layer may be adjusted. For example, the quantity and stacking of the Conv layer, the ReLU activation layer, the MaxPool layer, and the GlobalAvgPool layer in the feature extraction layer are as shown in Fig. 4, for extracting a one-dimensional depth feature vector from the fingerprint feature matrix (such as an ultrasonic fingerprint input image). For example, the fingerprint feature matrix is input into the Conv layer, convolved by a $3\times3$ convolution kernel, and then output, the ReLU activation layer performs a ReLU activation operation on the matrix output by the convolutional layer, then a max pooling kernel in the MaxPool layer performs a max pooling operation on the output of the ReLU activation layer, and finally, the GlobalAvgPool layer performs a global average pooling operation on the output of the max pooling layer to obtain a feature vector of the fingerprint feature matrix.

Optionally, the classification layer may include a plurality of sub network layers. For example, when the medium classification network is a CNN, as shown in Fig. 4, the classification layer consists of an FC fully-connected layer and a Softmax activation function layer, and is used for predicting probability scores of 7 media from depth feature vectors. The FC fully-connected layer is used for linearly transforming the features of the input data and then providing the linearly transformed features to subsequent layers for further processing. By stacking a plurality of fully-connected layers, the neural network can learn more complex features and patterns. The Softmax activation function is a function that converts input data into a probability distribution. In multi-class problems, the Softmax function is used in an output layer of the neural network to convert the output of a model into a probability of each class.

Optionally, the quantity of elements in the output fingerprint medium classification vector is related to a preset quantity of media in the medium classification network. For example, when the classification layer includes an FC, the FC outputs a 1*N vector, showing a probability that each element belongs to the class. The medium classification network outputs guide labels 0-unknown, 1-gelation, 2-PU, 3-latex, 4-silicon, 5-acrylic, and 6-resin. Only element values of a corresponding class are 1, and element values of other classes are 0. For example, the output vector corresponding to the gelation class is [0, 1, 0, 0, 0, 0, 0].

Step S208: Determine a medium type of the to-be-detected fingerprint based on the fingerprint medium classification vector.

Optionally, the medium type of the to-be-detected fingerprint may be determined from the corresponding value of each element in the fingerprint medium classification vector. For example, when the fingerprint medium classification vector is [0, 1, 0, 0, 0, 0, 0], it may be determined that the medium type of the to-be-detected fingerprint is gel.

Optionally, the fingerprint detection method provided in this embodiment may be applied to various scenarios that require fingerprint medium identification, including but not limited to scenarios of fingerprint medium testing and scenarios of real and fake fingerprint identification.

Through the above steps, native domain information of the to-be-detected fingerprint emulated on the target medium is obtained, fingerprint feature extraction is executed on the native domain information to obtain a fingerprint feature matrix, an classification operation is executed on the fingerprint feature matrix through the trained medium classification network to obtain a fingerprint medium classification vector, and finally, a medium type of the to-be-detected fingerprint is analyzed based on the fingerprint medium classification vector. By the classification operation using the trained medium classification network on the fingerprint feature matrix, a more accurate and high-quality fingerprint medium classification vector can be generated, thereby improving the accuracy and efficiency of identifying medium types and effectively detecting the types of fingerprint media. The technical effect of accurately and quickly identifying the type of a fingerprint medium is achieved, thereby solving the problem that the type of a fingerprint medium cannot be effectively detected in related technologies.

In an exemplary embodiment, before executing a classification operation on the fingerprint feature matrix through a trained medium classification network to obtain a fingerprint medium classification vector of the to-be-detected fingerprint, the method further includes:

Step 302: Collect native domain information of emulated fingerprints emulated on a plurality of types of media respectively to obtain a set of emulated fingerprint native domain information of a plurality of types of emulated fingerprints, where the set of emulated fingerprint native domain information of the plurality of types of emulated fingerprints includes: a plurality of pieces of identical medium emulated fingerprint native domain information obtained after multiple times of information collection on identical medium emulated fingerprints.

Optionally, this embodiment mainly involves a process of training the medium classification network. The plurality of types of media include but are not limited to media made of gel, PU, latex, silica gel, acrylic, resin, and other materials. For example, in the same environment, different media processes such as gelation, PU, latex, silicon, acrylic, and resin are used to produce a plurality of fake fingerprints corresponding to real fingers. The method of collecting the emulated fingerprint native domain information of emulated fingerprints emulated on the plurality of types of media is the same as that of collecting the native domain information of the to-be-detected fingerprint, and will not be repeated here.

Optionally, in order that the medium classification network learns more generalized feature representations, the quantity of training data should be as large as possible, and the quantity of data in each medium should be as consistent as possible. In order to improve the advantages of the classification solution over conventional manual feature modeling and extraction solutions, and to improve the sensitivity of a medium classification system to differences in fingers, temperatures, and system environments, each medium collection should at least cover more fingers (such as not less than 20), temperatures (such as ranging from 25°C below zero to 55°C), and machines (at least 3 different sampling machines for sampling). If training from zero is required, the specification of training data should be 100000 or more.

Step S304: Execute fingerprint feature extraction on each piece of the emulated fingerprint native domain information included in the set of emulated fingerprint native domain information of the plurality of types of emulated fingerprints to obtain a set of emulated fingerprint feature matrices of the plurality of types of emulated fingerprint.

Step S306: Train the medium classification network using the set of emulated fingerprint feature matrices and classification labels for the plurality of types of media to obtain the medium classification network, where the classification labels are used for representing media types of the plurality of types of media.

Optionally, when fingerprint native domain data corresponding to each medium is collected, the classification label of the corresponding medium may be marked. For example, gel is marked as 1, PU is marked as 2, latex is marked as 3, silica gel is marked as 4, acrylic is marked as 5, resin is marked as 6, and unknown types are marked as 0. If there are extra to-be-classified media, label values may be accumulated incrementally.

This embodiment can collect information more comprehensively by collecting emulated fingerprints on a plurality of types of media and performing digital conversion, thereby improving the accuracy of the identification system. The training using the plurality of types of media is conducive to enhancing the generalization capability of the model for different media features, thereby maintaining high accuracy of identification on unknown media. By training the medium classification network with the set of digital matrices and the classification labels, automatic learning and identification on medium types are implemented, manual intervention is reduced, and work efficiency is improved. Because the training process involves a plurality of types of media, the medium classification network can adapt to different media type, and the applicability and flexibility of algorithms are enhanced. By performing multiple times of information collection on identical emulated fingerprints emulated on an identical medium, the plurality of pieces of obtained emulated fingerprint native domain information can increase data richness and help improve the capability of recognizing subtle differences by the model.

In an exemplary embodiment, in step S304, executing fingerprint feature extraction on each piece of the emulated fingerprint native domain information included in the set of emulated fingerprint native domain information to obtain a set of emulated fingerprint feature matrices includes:

Step S3041: Execute the following operation on each piece of emulated fingerprint native domain information included in the set of emulated fingerprint native domain information to obtain a emulated fingerprint feature matrix of the piece of emulated fingerprint native domain information, where the set of emulated fingerprint feature matrices includes the emulated fingerprint feature matrix of the piece of emulated fingerprint native domain information: performing a signal conversion operation on the emulated fingerprint native domain information through a signal converter to obtain a group of digital signals of the emulated fingerprint native domain information; extracting digital features from the group of digital signals to obtain a group of fingerprint features of the emulated fingerprint native domain information; and determining the emulated fingerprint feature matrix of the emulated fingerprint native domain information as a group of fingerprint features including the emulated fingerprint native domain information.

Optionally, the signal conversion on the emulated fingerprint native domain information may be conversion by the following way: A type of the emulated fingerprint native domain information is determined for whether it is a type of analog signals or digital signals or other forms of information. An appropriate signal converter is selected according to the type of the emulated fingerprint native domain information. For example, if analog signals are converted into digital signals, an ADC may be required. Relevant parameters of the converter, such as sampling rate, resolution, and filtering, are configured according to the characteristics and requirements of the signals. The emulated fingerprint native domain information is input into the signal converter for the signal conversion operation. After the conversion is completed, the signal converter outputs a group of digital signals that are digital representations of the emulated fingerprint native domain information.

For example, an image of the to-be-detected fingerprint is obtained using a capacitive sensor. The image includes detailed information such as ridges and valleys of the fingerprints. The signal conversion using the signal converter on the fingerprint image includes mathematical methods such as Fourier transform and wavelet transform, to convert image information into a group of digital signals. These digital signals include feature information of the to-be-detected fingerprint. Digital features are extracted from the digital signals obtained by conversion. These features may be the ridge direction, ridge frequency, ridge curvature, and the like of the fingerprints. The extracted digital features are arranged in an order to form a digital matrix. This matrix includes all key information of the to-be-detected fingerprint.

This embodiment performs signal conversion and digital feature extraction on the native domain information through the signal converter, which can improve the efficiency of signal processing, enhance the readability of signals, describe the characteristics of fingerprints more accurately, and facilitate machine learning.

In an exemplary embodiment, in step S306, training the pre-training medium classification network using the set of emulated fingerprint feature matrices and classification labels for the plurality of types of media to obtain the trained medium classification network includes:

Step S3061: Input the set of emulated fingerprint feature matrices into the medium classification network for a training operation, where the training operation includes: inputting the emulated fingerprint feature matrices into a feature extraction layer included in the medium classification network, outputting feature vectors of the emulated fingerprint feature matrices by the feature extraction layer, inputting the feature vectors of the digital matrices into a classification layer included in the medium classification network, calculating, by the classification layer, probabilities that the feature vectors of the emulated fingerprint feature matrices belongs to the classification labels for the plurality of media, and outputting medium classification vectors, where the emulated fingerprint feature matrices are the fingerprint feature matrices included in the set of digital matrices.

Optionally, in step S3061, the medium classification network includes but is not limited to various types of neural networks, such as CNN, RNN, LSTM, and GNN. For example, when the medium classification network is a CNN, the structure of the CNN includes but is not limited to the network structure shown in Fig. 3, which includes a feature extraction layer and a classification layer. The CNN inputs each digital matrix in the set of digital matrices into the feature extraction layer, the feature extraction layer outputs a feature vector of each digital matrix to the classification layer, the classification layer calculates a probability that the feature vector of each digital matrix belongs to the classification labels for the plurality of media, and outputs a medium classification vector.

Optionally, the feature extraction layer may include a plurality of sub network layers. For example, when the medium classification network is a CNN, the feature extraction layer consists of a Conv layer (convolutional layer), a ReLU activation layer, a MaxPool (max pooling) layer, and a GlobalAvgPool (global pooling) layer. The Conv layer is used for extracting image features. The ReLU activation layer implements a non-linear activation function used for introducing non-linearity into the neural network, so that the network can learn and simulate more complex functions. The MaxPool layer is used for reducing the spatial size of features output by the convolutional layer, thereby reducing the quantity of parameters and computational complexity and making feature detection more robust. The GlobalAvgPool layer implements a special pooling operation that averagely pools the entire features. The quantity and stacking of the Conv layer, the ReLU activation layer, the MaxPool layer, and the GlobalAvgPool layer in the feature extraction layer may be adjusted. For example, the quantity and stacking of the Conv layer, the ReLU activation layer, the MaxPool layer, and the GlobalAvgPool layer in the feature extraction layer are as shown in Fig. 4, for extracting one-dimensional depth feature vectors from digital matrices (such as ultrasonic fingerprint Raw domain integral graph data).

Optionally, the classification layer may include a plurality of sub network layers. For example, when the medium classification network is a CNN, as shown in Fig. 4, the classification layer consists of an FC fully-connected layer and a Softmax activation function layer, and is used for predicting probability scores of 7 media from depth feature vectors. The FC fully-connected layer is used for linearly transforming the features of the input data and then providing the linearly transformed features to subsequent layers for further processing. By stacking a plurality of fully-connected layers, the neural network can learn more complex features and patterns. The Softmax activation function is a function that converts input data into a probability distribution. In multi-class problems, the Softmax function is usually used in an output layer of the neural network to convert the output of a model into a probability of each class.

Step S3062: Determine, based on the medium classification vectors and the classification label for a target medium, a loss value output by a loss function of the medium classification network, where the target medium is a medium corresponding to the digital matrix.

Optionally, the quantity of elements in the output medium classification vector is related to a preset quantity of media in the medium classification network. For example, when the classification layer includes an FC, the FC outputs a 1*N vector, showing a probability that each element belongs to the class. The medium classification network outputs guide labels 0-unknown, 1-gelation, 2-PU, 3-latex, 4-silicon, 5-acrylic, and 6-resin. For convenient training, the medium classification vector is converted into a one-hot encoding vector. Each class corresponds to a one-hot encoding vector, where only element values of a corresponding class are 1, and element values of other classes are 0. For example, the gelation class corresponds to [0, 1, 0, 0, 0, 0, 0].

Step S3064: End the training when the loss value satisfies a preset training end condition, to obtain the medium classification network.

Optionally, before the medium classification network is trained, the training for the medium classification network needs to be configured, for example, an AdamW optimizer is selected, an initial learning rate is $1 \times 10^{-3}$, cosine annealing scheduling is selected as a learning rate scheduling strategy, the learning rate is dynamically adjusted, and 100 epochs are trained. During training, the parameters need to be continuously updated, for example, an ultrasonic fingerprint image is randomly extracted from the set of digital matrices and input into the medium classification network to obtain a probability distribution of each medium class. A cross entropy (CE) loss is calculated from a predicted probability distribution $\widehat{Y} = \{\widehat{y_i}, i \in [0,6]\}$ and a true distribution $Y = \{y_i, i \in [0,6]\}$, and the network parameters are updated using a back propagation algorithm to gradually reduce the loss function. The loss function CE loss in step S3062 is calculated as follows: $CE(\widehat{Y}, Y) = -\sum_{i=0}^{6} y_i \log \widehat{y_i}$.

Step S3066: Adjust parameter values of the medium classification network when the loss value does not satisfy the preset training end condition, to reduce the loss value output by the loss function of the medium classification network in next training.

Optionally, the preset training end condition in step S3066 includes: whether a maximum iteration epoch has been reached, if so, stopping optimization and completing network training, otherwise repeating the above steps until the maximum iteration epoch is reached. Optionally, after the medium classification network is trained, the obtained CNN classification network can be directly applied to detection tasks of fingerprint media. In practical applications, pressed frame data is input into the CNN classification network as shown in Fig. 4, the CNN classification network outputs respective predicted scores $\widehat{Y} = \{\widehat{y_i}, i \in [0,6]\}$ of five media, the range of $\widehat{y_i}$ is (0, 1), and the class corresponding to the subscript of the maximum $\widehat{y_i}$ value is a medium class of the input predicted by the CNN classification network.

Optionally, in step S3066, when the loss value does not satisfy the preset training end condition, the parameters of the medium classification network may be adjusted using the following methods, to reduce the output value of the loss function: adjusting the learning rate, increasing the network depth or width, adjusting the optimizer, using regularization technology, using data enhancement, adjusting the loss function, adjusting hyper-parameters, and the like. It should be noted that adjusting the parameters of the medium classification network requires experimentation and adjustment based on specific tasks and datasets. By considering the plurality of methods comprehensively, the output value of the loss function can be effectively reduced, and the classification performance can be improved.

In this embodiment, the features of digital matrices can be effectively extracted by inputting the set of digital matrices into the medium classification network for training, to improve the accuracy of classification. The classification label probabilities of media can be calculated by inputting feature vectors of the digital matrices into the classification layer, to provide a basis for subsequent classification decisions. The loss value output by the loss function of the medium classification network can be determined based on the medium classification vectors and the classification label of the target medium, to provide feedback information for subsequent training. When the loss value satisfies the preset training end condition, the training can be ended to obtain the trained medium classification network, which improves the training efficiency. When the loss value does not satisfy the preset training end condition, the parameter values of the medium classification network are adjusted to reduce the loss value in the next training, thereby improving the flexibility and adaptability of the training. Through multiple iterations of training, the performance of the medium classification network can be continuously optimized to improve the accuracy and robustness of classification. In general, the above steps can effectively train the medium classification network with excellent performance by inputting the set of digital matrices, extracting features, calculating the loss value, adjusting parameters, and the like, thereby improving the accuracy and efficiency of classification tasks.

In an exemplary embodiment, after inputting the set of emulated fingerprint feature matrices into the medium classification network for a training operation, the method further includes:

Step S402: Extract a feature vector of each emulated fingerprint feature matrix included in the set of emulated fingerprint feature matrices output by the feature extraction layer.

Step S404: Map the feature vector of each emulated fingerprint feature matrix to a coordinate space of a preset dimension, and perform dimensionality reduction on the feature vector of each emulated fingerprint feature matrix in the coordinate space to obtain a feature vector of a target dimension.

Step S406: Visualize the feature vector of the target dimension of each emulated fingerprint feature matrix to display on a target interface.

Optionally, this embodiment is applicable to scenarios where the effectiveness of the medium classification network is verified in the process of training the medium classification network. In this embodiment, in order to effectively demonstrate the effectiveness of fingerprint medium classification by the built medium classification network, a non-linear dimensionality reduction technology (T-distributed Stochastic Neighbor Embedding, abbreviated as T-SNE) may be used to visualize deep learning features of different media. The T-SNE-based dimensionality reduction visualization is used for material feature analysis. T-SNE is used for embedding high-dimensional data into a low-dimensional space (the coordinate space of the preset dimension may be a two-dimensional or three-dimensional coordinate space) for the visualization of deep learning features, thereby revealing the similarities and differences between data points.

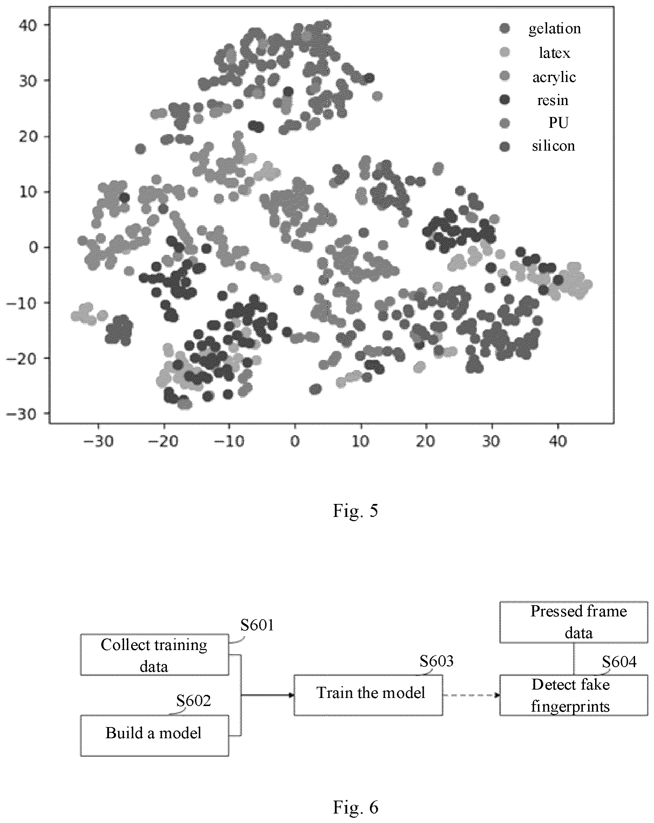

For example, in a qualitative analysis stage, the TSNE algorithm maps the feature vector of each digital matrix to the two-dimensional coordinate space, to visualize the output of the TSNE algorithm. For example, as shown in Fig. 5, the visualization distribution of 7-dimensional deep learning features after dimensionality reduction may be implemented by a method such as a scatter plot, where the position of each data point represents its coordinates in the low-dimensional space, and different colors or shapes may be used for distinguishing different media. The deep learning features of fingerprint data of 6 different media, including gel, silica gel and resin, show strong separability and polymerizability according to their physical characteristics, which proves the feasibility of guiding the learning of implicit physical characteristics in the native domains of different media based on deep learning technology.

For example, in a quantitative analysis stage, the comparison of quantitative results of medium detection is shown in Table 1. A classic statistical method for evaluating the performance and accuracy of multi-classification tasks using a classification accuracy confusion matrix of five different pressed media is used, where values on the diagonals of the confusion matrix represent probabilities of correct results that each medium class is accurately classified. These values can be used for calculating classification accuracy and other related indicators. The classification accuracy confusion matrix is used for evaluating the performance of the classification network. For a classification task of five different pressed media, the confusion matrix is a $5\times5$ matrix, where each row represents an actual class and each column represents a predicted class. For example, there are five pressed media: A, B, C, D, and E. The confusion matrix includes the following cells: True Positives (TP): the number of samples predicted as that class and actually that class. False Positives (FP): the number of samples predicted as that class but actually not that class. False negatives (FN): the number of samples predicted as not that class but actually that class. True Negatives (TN): the number of samples predicted as not that class and actually not that class, for binary classification problems. Actual class: A B C D E; Predicted class: A B E D A. The confusion matrix may be as follows:

"A B C D E
A TP1 0 0 0 0 FN1
B 0 TP2 0 FN2 0
C 0 0 TP3 0 0
D 0 FN3 0 TP4 0
E FN4 0 0 0 TP5".

'TP1' is used for representing the number of samples that are actually class A and correctly predicted as class A, and 'FN1' is used for representing the number of samples that are actually class A but incorrectly predicted as other classes.

In this embodiment, the confusion matrix provides a comprehensive view of classification performance, including details of correct classification and incorrect classification. The performance of the classifier can be understood more comprehensively through the confusion matrix, and the model can be improved by adjusting model parameters or using different classification algorithms.

Table 1:

| Medium class | Total | pred-gelation | pred-PU | pred-latex | pred-silicon | pred-resin |
|---|---|---|---|---|---|---|
| gelation | 9792 | 89.09% | 2.22% | 3.43% | 1.21% | 4.05% |
| polyuretha ne PU | 7520 | 4.84% | 86.01% | 4.30% | 1.57% | 3.28% |
| latex | 11992 | 5.15% | 2.54% | 86.58% | 2.59% | 3.13% |
| silicon | 20988 | 2.77% | 1.71% | 4.52% | 88.62% | 2.38% |
| resin | 7691 | 7.02% | 1.74% | 3.48% | 1.44% | 86.31% |

By observing the visualized results, this embodiment can analyze how the features of different fingerprint media are distributed in the low-dimensional space. If the features of the fingerprint media form different clusters in visualization, it means that data from different media are distinguishable in the feature space. Based on the visualized results, the network training or feature extraction step may be performed again to improve network performance or select more suitable features. Qualitative analysis on the correlation and differences of deep learning features of different media is implemented. In addition, deep anti-counterfeiting feature extraction based on native domain features can be effectively implemented, materials of the same medium are effectively aggregated in the dimensionality reduction space, and different media exhibit strong separability even in the two-dimensional space.

In an exemplary embodiment, in step S204, executing fingerprint feature extraction on the native domain information to obtain a fingerprint feature matrix of the to-be-detected fingerprint includes:
Step S2041: Build a set of native domain information, where the set of native domain information includes a plurality of pieces of native domain information of the to-be-detected fingerprint obtained within a current time period, or the set of native domain information includes a plurality of pieces of historical native domain information obtained within a historical time period and the native domain information obtained within the current time period.

Optionally, the plurality of pieces of native domain information of the to-be-detected fingerprint obtained within the current time period refers to pressing the same fingerprint medium multiple times on a fingerprint collector to obtain more comprehensive and clearer fingerprint information. Accordingly, the quantity of collected fingerprint feature points increases, which can improve the accuracy of identification. Continuous pressing can reduce repeated collection required due to collection failure, thereby improving overall collection efficiency. The fingerprints corresponding to the plurality of pieces of historical native domain information obtained within the historical time period may be the same as or different from the fingerprints corresponding to the native domain information obtained within the current time period.

Step S2042: Convert all the native domain information included in the set of native domain information into digital signals by the signal converter to obtain a plurality of groups of digital signals.

Optionally, in this embodiment, the methods of converting all the native domain information into digital signals by the signal converter and extracting digital feature signals are the same as the processing for native domain information described above, and will not be repeated here.

Step S2043: Extract digital features from each of the groups of digital signals to obtain fingerprint features of each of the groups of native domain information.

Step S2044: Generate a matrix including the fingerprint features of each of the groups of native domain information according to signal collection channels of a target sensor that obtains the native domain information included in the set of native domain information, to obtain a plurality of groups of fingerprint feature matrices.

Optionally, generating a digital matrix including the digital features of each of the groups of digital signals according to signal collection channels of a target sensor that obtains the native domain information included in the set of native domain information includes but is not limited to the following ways: Definition of a matrix dimension: Determine the number of rows and columns of the generated digital matrix. Usually, the number of rows represents a time series or sample size, and the number of columns represents different signal channels. Matrix initialization: Create an empty matrix with an appropriate dimension to store signal data collected from each channel. Signal collection: Use a sensor to collect signals from each channel. Each channel may correspond to a different type of signals, such as temperature, pressure, or fingerprint pattern. Data formatting: Format the collected signal data into numerical values, which may be digital sampling values of analog signals. Matrix filling: Fill the corresponding columns of the matrix with the signals and data of each channel in order. For example, if the data of the first channel is about temperature, the data fills the first column of the matrix; if the data of the second channel is about pressure, the data fills the second column, and so on.

Step S2045: Combine the plurality of groups of fingerprint feature matrices to obtain the to-be-detected fingerprint feature matrix.

Optionally, the way to combine the plurality of groups of digital matrices described above includes but is not limited to merging the plurality of groups of digital matrices into one digital matrix, for example, merging two matrices into a larger matrix. Specifically, the way includes: Vertical merging (merging by row): Place two matrices up and down to form a new matrix, the number of rows of which is a sum of the rows of the two matrices, and the number of columns of which remains unchanged. Horizontal merging (merging by column): Place two matrices side by side to form a new matrix, the number of columns of which is a sum of the columns of the two matrices, and the number of rows of which remains unchanged. If the dimensions of the two matrices allow, the two matrices can be placed at specific positions in a larger matrix to form a block matrix.

In this embodiment, fingerprint features of different angles can be collected by collecting multi-modal fingerprint data for the identification of fingerprint media. The uncertainty that a single fingerprint feature may exist is reduced, thereby improving the accuracy of fingerprint media identification.

In an exemplary embodiment, in step S204, executing a classification operation on the fingerprint feature matrix through a trained medium classification network to obtain a fingerprint medium classification vector of the to-be-detected fingerprint includes:

Step S2041: Input the to-be-detected fingerprint feature matrix into the feature extraction layer included in the medium classification network, and extract a feature vector of each group of fingerprint feature matrix included in the to-be-detected fingerprint feature matrix by the feature extraction layer.
Step S2042: Input the feature vector of each group of fingerprint feature matrix output by the feature extraction layer into the classification layer included in the medium classification network, and calculate, by the classification layer, a probability that the feature vector of each group of fingerprint feature matrix belongs to the classification labels for the plurality of media.
Step S2043: Combine the plurality of classification vectors output by the classification layers to obtain the fingerprint medium classification vector.

Optionally, the fingerprint feature matrix is input into the feature extraction layer included in the medium classification network, and the feature extraction layer extracts each layer of digital matrix from the fingerprint feature matrix layer by layer to obtain a feature vector of each layer. Similarly, the classification layer also calculates a probability that each feature vector belongs to each class. The probability of each class is converted into a vector distribution, to obtain a plurality of groups of medium vectors. The medium vector corresponding to the current time period at the bottom layer is finally determined as a medium vector of the to-be-detected fingerprint medium.

In this embodiment, a combination of data modalities is used as input to the medium classification network, and different data modalities may capture different features of the to-be-detected fingerprint medium. Combining these modalities can improve the performance of the classification layer. Moreover, combining the plurality of modalities can increase the diversity of fingerprint features, thereby reducing the risk of over-fitting. In general, the performance and adaptability of the medium classification network in medium detection task can be significantly improved.

The following provides a further explanation of the present application in conjunction with a specific embodiment.

In this specific embodiment, a medium detection model is built using a deep learning network based on the differences in physical characteristics of different media in emulated fingerprints (including but not limited to capacitance impedance value, relative depths of ridges and valleys, acoustic impedance, optical polarization characteristics, and the like), and data are collected for training and optimization to build a deep learning network CNN model. The detection and classification of fingerprint media in an in-screen fingerprint system are illustrated as an example. As shown in Fig. 6, this specific embodiment includes the following steps:

S601: Collect training data, namely, collect a set of emulated fingerprint native domain information. For example, in the same environment, different media processes such as gelation, PU, latex, silicon, acrylic, and resin are used to produce fake fingerprints corresponding to real fingers. Collect fingerprint native domain data corresponding to each medium.
S602: Build a CNN model. For example, a CNN model as shown in Fig. 4 is built. The input is ultrasonic fingerprint Raw domain integral graph data, and the output is medium classification results. The network architecture mainly consists of two parts: a feature extraction layer and a classification layer. The feature extraction layer is formed by stacking a Conv layer, a ReLU activation layer, a MaxPool layer, and a GlobalAvgPool layer, and is used for extracting one-dimensional depth feature vectors from ultrasonic fingerprint input images. The classification layer consists of an FC and a Softmax activation function layer, and is used for predicting probability scores of 7 media from the depth feature vectors. The CNN model outputs guide labels 0-unknown, 1-gelation, 2-PU, 3-latex, 4-silicon, 5-acrylic, and 6-resin. For convenient training, the medium classification vector is converted into a one-hot encoding vector. Each class corresponds to a one-hot encoding vector, where only element values of a corresponding class are 1, and element values of other classes are 0.
S603: Train and optimize the CNN model. The CNN model built in S602 is trained and optimized using the training set built in S601, so that the CNN model is applicable to medium detection tasks.
S604: Detect fake fingerprints. After training, the CNN model in S603 can be directly applied to fingerprint medium detection tasks. In practical applications, pressed frame data is input into the CNN model, the CNN model outputs respective predicted scores $\hat{Y} = \{\hat{y}_i, i \in [0,6]\}$ of five media, the range of $\hat{y}_i$ is (0, 1), and the class corresponding to the subscript of the maximum $\hat{y}_i$ value is a medium class of the input image predicted by the model. The range of detection includes but is not limited to detection of gelation, PU, latex, silicon, acrylic, resin, and unknown materials of emulated fingerprints.

This specific embodiment takes the ultrasonic in-screen fingerprint system as an example to exhibit the differences in physical properties hidden in the features extracted by deep learning technology for different media, and builds the deep learning convolutional neural network model for media detection, thereby reducing the computational complexity of the algorithm without relying on additional complex sensors and ensuring high accuracy of media detection.

Through the description of the above implementations, those skilled in the art can clearly understand that the method according to the above embodiments can be implemented by software in addition to a necessary universal hardware platform or by hardware only. In most cases, the former is a more preferred implementation. Based on such an understanding, the technical solutions of the present application essentially, or the part contributing to existing technologies may be implemented in a form of a software product. The software product is stored in a storage medium (such as an ROM/RAM, a magnetic disk, or an optical disk), and includes a plurality of instructions for instructing a terminal device (which may be a mobile phone, a computer, a server, a network device, or the like) to execute the method described in the embodiments of the present application.

In this embodiment, a fingerprint detection apparatus is further provided. The apparatus is used for implementing the foregoing embodiments and preferred implementations, and those described above will not be repeated. As used below, the term "module" may refer to a combination of software and/or hardware that implements predetermined functions. Although the apparatus described in the following embodiments is preferably implemented by software, the implementation by hardware or a combination of software and hardware is also possible and conceivable.

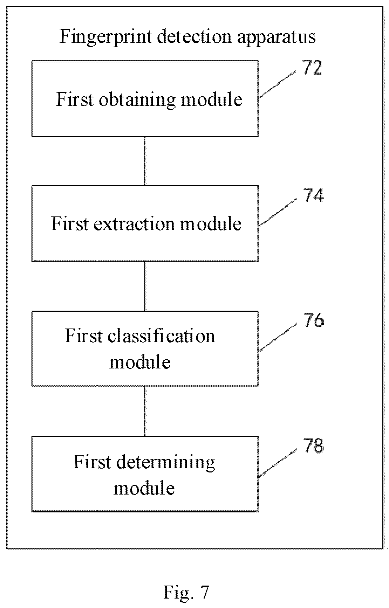

Fig. 7 is a block diagram of a structure of a fingerprint detection apparatus according to an embodiment of the present application. As shown in Fig. 7, the apparatus includes:

a first obtaining module 72, configured to obtain native domain information of a to-be-detected fingerprint, where the native domain information is original data collected when the to-be-detected fingerprint is verified;
a first extraction module 74, configured to execute fingerprint feature extraction on the native domain information to obtain a fingerprint feature matrix of the to-be-detected fingerprint;
a first classification module 76, configured to execute a classification operation on the fingerprint feature matrix through a trained medium classification network to obtain a fingerprint medium classification vector of the to-be-detected fingerprint, where the fingerprint medium classification vector is used for representing, in a vector form, probabilities that the to-be-detected fingerprint belongs to a plurality of medium types respectively; and
a first determining module 78, configured to determine a medium type of the to-be-detected fingerprint based on the fingerprint medium classification vector.

In an exemplary embodiment, the apparatus further includes: a first collection unit, configured to, before executing a classification operation on the fingerprint feature matrix through a trained medium classification network to obtain a fingerprint medium classification vector of the to-be-detected fingerprint, collect emulated fingerprint native domain information of emulated fingerprints emulated on a plurality of types of media respectively to obtain a set of emulated fingerprint native domain information, where partial emulated fingerprint native domain information included in the set of emulated fingerprint native domain information includes: a plurality of pieces of emulated fingerprint native domain information obtained after multiple times of information collection on the same emulated fingerprints emulated on the identical medium; a first execution unit, configured to execute fingerprint feature extraction on each piece of the emulated fingerprint native domain information included in the set of emulated fingerprint native domain information to obtain a set of emulated fingerprint feature matrices; and a first training unit, configured to train the medium classification network using the set of emulated fingerprint feature matrices and classification labels for the plurality of types of media to obtain the medium classification network, where the classification labels are used for representing media types of the plurality of types of media.

In an exemplary embodiment, the first execution unit includes: a first execution submodule, configured to execute the following operation on each piece of emulated fingerprint native domain information included in the set of emulated fingerprint native domain information to obtain a emulated fingerprint feature matrix of the piece of emulated fingerprint native domain information, where the set of emulated fingerprint feature matrices includes the emulated fingerprint feature matrix of the piece of emulated fingerprint native domain information: performing a signal conversion operation on the emulated fingerprint native domain information through a signal converter to obtain a group of digital signals of the emulated fingerprint native domain information; extracting digital features from the group of digital signals to obtain a group of fingerprint features of the emulated fingerprint native domain information; and determining the emulated fingerprint feature matrix of the emulated fingerprint native domain information as a group of fingerprint features including the emulated fingerprint native domain information.

In an exemplary embodiment, the first training unit includes: a first input submodule, configured to input the set of emulated fingerprint feature matrices into the medium classification network for a training operation, where the training operation includes: inputting the emulated fingerprint feature matrices into a feature extraction layer included in the medium classification network, outputting feature vectors of the emulated fingerprint feature matrices by the feature extraction layer, inputting the feature vectors of the digital matrices into a classification layer included in the medium classification network, calculating, by the classification layer, probabilities that the feature vectors of the emulated fingerprint feature matrices belongs to the classification labels for the plurality of media, and outputting medium classification vectors, where the emulated fingerprint feature matrices are the fingerprint feature matrices included in the set of digital matrices; a first determining submodule, configured to determine, based on the medium classification vectors and the classification label for a target medium, a loss value output by a loss function of the medium classification network, where the target medium is a medium corresponding to the digital matrix; a first processing submodule, configured to end the training when the loss value satisfies a preset training end condition, to obtain the medium classification network; and a first adjustment submodule, configured to adjust parameter values of the medium classification network when the loss value does not satisfy the preset training end condition, to reduce the loss value output by the loss function of the medium classification network in next training.

In an exemplary embodiment, the apparatus further includes: a first extraction module, configured to, after inputting the set of emulated fingerprint feature matrices into the medium classification network for a training operation, extract a feature vector of each emulated fingerprint feature matrix included in the set of emulated fingerprint feature matrices output by the feature extraction layer; a first mapping module, configured to map the feature vector of each emulated fingerprint feature matrix to a coordinate space of a preset dimension, and perform dimensionality reduction on the feature vector of each emulated fingerprint feature matrix in the coordinate space to obtain a feature vector of a target dimension; and a first operation module, configured to visualize the feature vector of the target dimension of each emulated fingerprint feature matrix to display on a target interface.

In an exemplary embodiment, the first extraction module includes: a first building unit, configured to build a set of native domain information, where the set of native domain information includes a plurality of pieces of native domain information of the to-be-detected fingerprint obtained within a current time period, or the set of native domain information includes a plurality of pieces of historical native domain information obtained within a historical time period and the native domain information obtained within the current time period; a first conversion unit, configured to convert all the native domain information included in the set of native domain information into digital signals by the signal converter to obtain a plurality of groups of digital signals; a first extraction unit, configured to extract digital features from each of the groups of digital signals to obtain fingerprint features of each of the groups of native domain information; a first generation unit, configured to generate a matrix including the fingerprint features of each of the groups of native domain information according to signal collection channels of a target sensor that obtains the native domain information included in the set of native domain information, to obtain a plurality of groups of fingerprint feature matrices; and a first combination unit, configured to combine the plurality of groups of fingerprint feature matrices to obtain the to-be-detected fingerprint feature matrix.

In an exemplary embodiment, the first classification module includes: a first input unit, configured to input the to-be-detected fingerprint feature matrix into the feature extraction layer included in the medium classification network, and extract a feature vector of each group of fingerprint feature matrix included in the to-be-detected fingerprint feature matrix by the feature extraction layer; a second input unit, configured to input the feature vector of each group of fingerprint feature matrix output by the feature extraction layer into the classification layer included in the medium classification network, and calculate, by the classification layer, a probability that the feature vector of each group of fingerprint feature matrix belongs to the classification labels for the plurality of media; and a second combination unit, configured to combine the plurality of classification vectors output by the classification layers to obtain the fingerprint medium classification vector.

With regard to the apparatus in the foregoing embodiment, the specific manners that various modules execute operations are described in detail in the embodiments relating to the method, and details are not described herein.

It should be noted that the above modules may be implemented by software or hardware. For the latter, the modules may be implemented by the following way, but not limited to: the above modules are all located in the same processor; or the above modules are located in different processors in any combination.

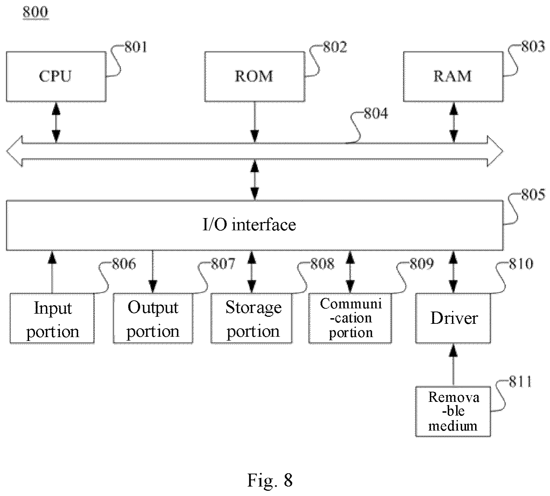

According to an aspect of the present application, a computer program product is provided, including a computer program/instructions that include program code for executing the method shown in Fig. 8. In such an embodiment, the computer program may be downloaded and installed from a network by a communication portion 809, and/or installed from a removable medium 811. When the computer program is executed by a central processing unit 801, various functions provided by the embodiments of the present application are executed.

The serial numbers of the foregoing embodiments of the present application are merely for description, and do not imply the preference of the embodiments.

Fig. 8 illustrates a structural block diagram of a computer system of an electronic device used for implementing the embodiments of the present application.

It should be noted that the computer system 800 of the electronic device shown in Fig. 8 is only an example and should not impose any limitations on the functionality and scope of use of the embodiments of the present application.

As shown in Fig. 8, the computer system 800 includes a central processing unit (CPU) 801, which may execute various appropriate operations and processes according to programs stored in a read-only memory (ROM) 802 or programs loaded from a storage portion 808 into a random access memory (RAM) 803. The random access memory 803 further stores various programs and data required by operations of the system. The central processing unit 801, the read-only memory 802, and the random access memory 803 are connected to each other by a bus 804. An input/output (I/O) interface 805 is also connected to the bus 804.

The following components are connected to the input/output interface 805: an input portion 1006 including a keyboard, a mouse, or the like; an output portion 807 including a cathode ray tube (CRT), a liquid crystal display (LCD), a speaker, or the like; a storage portion 808 including a hard disk or the like; and a communication portion 809 including a network interface card, such as a local area network card or a modem. The communication portion 809 executes communication processes via a network, such as the Internet. A driver 810 is also connected to the input/output interface 805 as required. A removable medium 811, such as a magnetic disk, an optical disk, a magneto-optical disk, or a semiconductor memory, may be installed on the driver 810, so that a computer program read therefrom is installed on the storage portion 808 as needed.

In particular, according to the embodiments of the present application, the process described in each method flowchart may be implemented as a computer software program. For example, an embodiment of the present application provides a computer program product including a computer program loaded to a computer-readable medium, the computer program including program code for executing the method shown in the flowchart. In such an embodiment, the computer program may be downloaded and installed from a network by the communication portion 809, and/or installed from the removable medium 811. When the computer program is executed by the central processing unit 801, various functions defined in the system of the present application are executed.

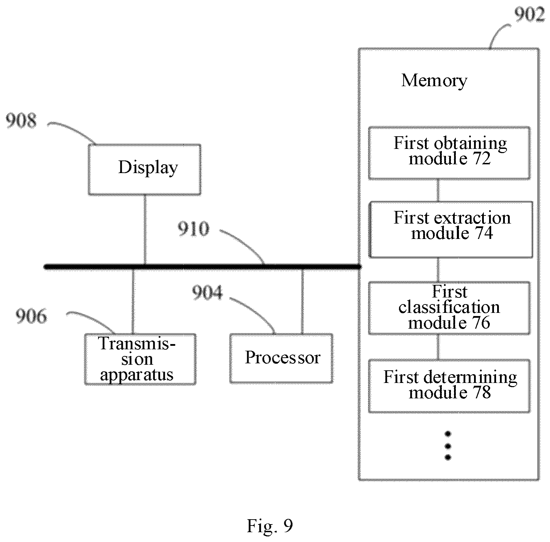

According to another aspect of the embodiments of the present application, an electronic device for implementing the foregoing fingerprint detection method is further provided. The electronic device may be the terminal device or server shown in Fig. 1. In this embodiment, the terminal device is used as an example of the electronic device for description. As shown in Fig. 9, the electronic device includes a memory 902 and a processor 904, the memory 902 stores a computer program, and the processor 904 is configured to execute the steps in any of the foregoing method embodiments through the computer program.

Optionally, in this embodiment, the electronic device may be at least one network device among a plurality of network devices of a computer network.

Optionally, in this embodiment, the processor may be configured to execute the following steps through the computer program:

S1: Obtain native domain information of a to-be-detected fingerprint, where the native domain information is original data collected when the to-be-detected fingerprint is verified.

S2: Execute fingerprint feature extraction on the native domain information to obtain a fingerprint feature matrix of the to-be-detected fingerprint.

S3: Execute a classification operation on the fingerprint feature matrix through a trained medium classification network to obtain a fingerprint medium classification vector of the to-be-detected fingerprint, where the fingerprint medium classification vector is used for representing, in a vector form, a probability that the to-be-detected fingerprint belongs to a plurality of medium types respectively.

S4: Determine a medium type of the to-be-detected fingerprint based on the fingerprint medium classification vector.

Optionally, those of ordinary skill in the art may understand that the structure shown in Fig. 9 is only schematic. The electronic device may also be a smart phone (such as an Android phone or an iOS phone), a tablet, a palm computer, a mobile Internet device (MID), a PAD, or other terminal devices. Fig. 9 does not limit the structure of the electronic device. For example, the electronic device may include more or fewer components (such as network interfaces) than those shown in Fig. 9, or have configurations different from those shown in Fig. 9.

The memory 902 may be configured to store software programs and modules, such as program instructions/-modules corresponding to the fingerprint detection method and apparatus in the embodiments of the present application. The processor 904 executes various functional applications and data processing by running the software programs and modules stored in the memory 902, to implement the fingerprint detection method. The memory 902 may include a high-speed random access memory, and may also include a non-volatile memory, such as one or more magnetic storage apparatuses, flash memories, or other non-volatile solid-state memories. In some examples, the memory 902 may further include memories remotely disposed relative to the processor 904, and these remote memories may be connected to the terminal through a network. Examples of the network include, but are not limited to, the Internet, an intranet, a local area network, a mobile communications network, or a combination thereof. The memory 902 may be configured to store information such as codes of articles, but is not limited thereto. As an example, as shown in Fig. 9, the memory 902 may include, but is not limited to, the first obtaining module 72, the first extraction module 74, the first classification module 76, and the first determining module 78 in the foregoing fingerprint detection apparatus. In addition, the memory may also include but is not limited to other modules and units in the fingerprint detection apparatus, which will not be repeated in this example.

Optionally, the transmission apparatus 906 is configured to receive or send data via a network. Specific examples of the network may include wired networks and wireless networks. In one example, the transmission apparatus 906 includes a network interface controller (NIC), which may be connected to other network devices and routers through network cables to communicate with the Internet or local area network. In one example, the transmission apparatus 906 is a radio frequency (RF) module, which is configured to communicate with the Internet in a wireless manner.

Moreover, the electronic device further includes: a display 908, configured to display initial code; and a connection bus 910, configured to connect various modules and components in the electronic device.

In other embodiments, the foregoing terminal device or server may be a node in a distributed system, where the distributed system may be a blockchain system, which may be a distributed system formed by connecting a plurality of nodes in a form of network communication. The nodes may form a peer-to-peer network. Any form of computing device, such as a server, a terminal, and other electronic devices, may become a node in the blockchain system by joining the peer-to-peer network.

According to one aspect of the present application, a computer-readable storage medium is provided. A processor of a computer device reads computer instructions from the computer-readable storage medium, and the processor executes the computer instructions to enable the computer device to execute the fingerprint detection method provided in various optional implementations of determining the type of a fingerprint medium as described above.

Optionally, in this embodiment, the computer-readable storage medium may be configured to store a computer program for executing the following steps:

S1: Obtain native domain information of a to-be-detected fingerprint, where the native domain information is original data collected when the to-be-detected fingerprint is verified.
S2: Execute fingerprint feature extraction on the native domain information to obtain a fingerprint feature matrix of the to-be-detected fingerprint.
S3: Execute a classification operation on the fingerprint feature matrix through a trained medium classification network to obtain a fingerprint medium classification vector of the to-be-detected fingerprint, where the fingerprint medium classification vector is used for representing, in a vector form, probabilities that the to-be-detected fingerprint belongs to a plurality of medium types respectively.
S4: Determine a medium type of the to-be-detected fingerprint based on the fingerprint medium classification vector.

Optionally, in this embodiment, those of ordinary skill in the art may understand that all or some of the steps of the methods in the foregoing embodiments may be completed by a program instructing relevant hardware of a terminal device. The program may be stored in a computer-readable storage medium. The storage medium may include a flash disk, a read-only memory (ROM), a random access memory (RAM), a magnetic disk, an optical disk, or the like.

The serial numbers of the foregoing embodiments of the present application are merely for description, and do not imply the preference of the embodiments.

When the integrated unit in the foregoing embodiments is implemented in a form of a software function unit and is sold or used as an independent product, the integrated unit may be stored in the computer-readable storage medium. Based on such an understanding, the technical solutions of the present application essentially, or the part contributing to existing technologies, or all or some of the technical solutions may be implemented in a form of a software product. The computer software product is stored in a storage medium and includes a plurality of instructions for instructing one or more computer devices (which may be a personal computer, a server, or a network device) to execute all or some of the steps of the methods described in the embodiments of the present application.

In the foregoing embodiments of the present application, the description of each embodiment has different emphasis. For a part that is not described in detail in an embodiment, reference may be made to relevant descriptions of other embodiments.

In the several embodiments provided in the present application, it should be understood that the disclosed client may be implemented in other manners. The apparatus embodiment described above is only schematic. For example, the division of the units is only a logic function division, other divisions may be allowed in practice. For example, a plurality of units or components may be combined or integrated in another system, or some features may be omitted or are not executed. In addition, the displayed or discussed mutual coupling or direct coupling or communication connection may be implemented through some interfaces. The indirect coupling or communication connection between units or modules may be in an electrical form or other forms.

The units illustrated as separate components may be or may not be physically separated, and the components displayed as units may be or may not be physical units, that is, the components may be located at one place or may also be distributed to a plurality of network units. Some or all of the units may be selected based on actual requirements to achieve the objectives of the solutions of the embodiments.

In addition, the functional units in the embodiments of the present application may be integrated into one processing unit, or each of the units may exist alone physically, or two or more units are integrated into one unit. The integrated unit may be implemented in a form of hardware or a software functional unit.

Described above are merely the preferred embodiments of the present application. It should be pointed out that, for those of ordinary skill in the art, a plurality of improvements and modifications may also be made without departing from the principles of the present application, and these improvements and modifications may also be regarded to be within the scope of protection of the present application.

## Claims

1.  A fingerprint detection method, comprising:

    obtaining native domain information of a to-be-detected fingerprint, wherein the native domain information is original data collected when the to-be-detected fingerprint is verified;

    executing fingerprint feature extraction on the native domain information to obtain a fingerprint feature matrix of the to-be-detected fingerprint;

    executing a classification operation on the fingerprint feature matrix through a trained medium classification network to obtain a fingerprint medium classification vector of the to-be-detected fingerprint, wherein the fingerprint medium classification vector is used for representing, in a vector form, a probability that the to-be-detected fingerprint belongs to a plurality of medium types respectively; and

    determining a medium type of the to-be-detected fingerprint based on the fingerprint medium classification vector.

2.  The method according to claim 1, wherein before executing a classification operation on the fingerprint feature matrix through a trained medium classification network to obtain a fingerprint medium classification vector of the to-be-detected fingerprint, the method further comprises:

    collecting native domain information of emulated fingerprints emulated on a plurality of types of media respectively to obtain a set of emulated fingerprint native domain information of a plurality of types of emulated fingerprints, wherein the set of emulated fingerprint native domain information of the plurality of types of emulated fingerprints comprises: a plurality of pieces of emulated fingerprint native domain information of an identical medium emulated fingerprints obtained after multiple times of information collection on the identical medium emulated fingerprints;

    executing fingerprint feature extraction on each piece of the emulated fingerprint native domain information comprised in the set of emulated fingerprint native domain information of the plurality of types of emulated fingerprints to obtain a set of emulated fingerprint feature matrices of the plurality of types of emulated fingerprints; and

    training the medium classification network using the set of emulated fingerprint feature matrices and classification labels for the plurality of types of media to obtain the medium classification network, wherein the classification labels are used for representing media types of the plurality of types of media.

3.  The method according to claim 2, wherein training a pre-training medium classification network using the set of emulated fingerprint feature matrices and the classification labels for the plurality of types of media to obtain the trained medium classification network comprises:

    inputting the set of emulated fingerprint feature matrices into the medium classification network for a training operation, wherein the training operation comprises: inputting the emulated fingerprint feature matrices into a feature extraction layer comprised in the medium classification network, outputting feature vectors of the emulated fingerprint feature matrices by the feature extraction layer, inputting the feature vectors of the emulated fingerprint feature matrices into a classification layer comprised in the medium classification network, calculating, by the classification layer, probabilities that the feature vectors of the emulated fingerprint feature matrices belong to the classification labels for a plurality of media, and outputting medium classification vectors;

determining, based on the medium classification vectors and the classification labels for the media, a loss value output by a loss function of the medium classification network; and

ending the training when the loss value satisfies a preset training end condition, to obtain the trained medium classification network; or

adjusting parameter values of the medium classification network when the loss value does not satisfy the preset training end condition, to reduce the loss value output by the loss function of the medium classification network in next training.

4. The method according to claim 3, wherein after inputting the set of emulated fingerprint feature matrices into the medium classification network for a training operation, the method further comprises:

extracting a feature vector of each emulated fingerprint feature matrix comprised in the set of emulated fingerprint feature matrices output by the feature extraction layer;

mapping the feature vector of each emulated fingerprint feature matrix to a coordinate space of a preset dimension, and performing dimensionality reduction on the feature vector of each emulated fingerprint feature matrix in the coordinate space to obtain a feature vector of a target dimension; and

visualizing the feature vector of the target dimension of each emulated fingerprint feature matrix to display on a target interface.

5. The method according to claim 1, wherein the executing fingerprint feature extraction on the native domain information to obtain a fingerprint feature matrix of the to-be-detected fingerprint comprises:

building a set of native domain information, wherein the set of native domain information comprises a plurality of pieces of native domain information of the to-be-detected fingerprint obtained within a current time period, or the set of native domain information comprises a plurality of pieces of historical native domain information obtained within a historical time period and the native domain information obtained within the current time period;

converting the native domain information comprised in the set of native domain information into digital signals by the signal converter to obtain a plurality of groups of digital signals;

extracting digital features from each of the groups of digital signals to obtain fingerprint features of each of the groups of native domain information;

generating a matrix comprising the fingerprint features of each of the groups of native domain information according to signal collection channels of a target sensor that obtains the native domain information comprised in the set of native domain information, to obtain a plurality of groups of fingerprint feature matrices; and

combining the plurality of groups of fingerprint feature matrices to obtain the to-be-detected fingerprint feature matrix.

6. The method according to claim 5, wherein the executing a classification operation on the fingerprint feature matrix through a trained medium classification network to obtain a fingerprint medium classification vector of the to-be-detected fingerprint comprises:

inputting the to-be-detected fingerprint feature matrix into the feature extraction layer comprised in the medium classification network, and extracting a feature vector of each group of fingerprint feature matrix comprised in the to-be-detected fingerprint feature matrix by the feature extraction layer;

inputting the feature vector of each group of fingerprint feature matrix output by the feature extraction layer into the classification layer comprised in the medium classification network, and calculating, by the classification layer, a probability that the feature vector of each group of fingerprint feature matrix belongs to the classification labels for the plurality of types of media; and

combining the plurality of classification vectors output by the classification layers to obtain the fingerprint medium classification vector.

7. A fingerprint detection apparatus, comprising:

a first obtaining module, configured to obtain native domain information of a to-be-detected fingerprint, wherein the native domain information is original data collected when the to-be-detected fingerprint is verified;

a first extraction module, configured to execute fingerprint feature extraction on the native domain information to obtain a fingerprint feature matrix of the to-be-detected fingerprint;

a first classification module, configured to execute a classification operation on the fingerprint feature matrix through a trained medium classification network to obtain a fingerprint medium classification vector of the to-be-detected fingerprint, wherein the fingerprint medium classification vector is used for representing, in a vector form, a probability that the to-be-detected fingerprint belongs to a plurality of medium types respectively; and

a first determining module, configured to determine a medium type of the to-be-detected fingerprint based on the fingerprint medium classification vector.

8. A computer program product, comprising a computer program, wherein the computer program, when executed by a processor, implements the steps of the method according to any one of claims 1 to 7.

9. A computer-readable storage medium, wherein the computer-readable storage medium stores a computer program that, when executed by a processor, implements the steps of the method according to any one of claims 1 to 7.

10. An electronic device, comprising a memory, a processor, and a computer program stored in the memory and executable on the processor, wherein when the processor executes the computer program, the steps of the method according to any one of claims 1 to 7 are implemented.

Database 105

Database 105

Determination method for
fingerprint medium types

Application
107

Terminal
device
103

Store or read

Server
101

Network

Fig. 1

Obtain native domain information of to-be-detected fingerprint, where the native domain information is original data collected when the to-be-detected fingerprint is verified ⟍ S202

Execute fingerprint feature extraction on the native domain information to obtain a fingerprint feature matrix of the to-be-detected fingerprints ⟍ S204

Execute a classification operation on the fingerprint feature matrix through a trained medium classification network to obtain a fingerprint medium classification vector of the to-be-detected fingerprint, where the fingerprint medium classification vector is used for representing, in a vector form, a probability that the to-be-detected fingerprints belongs to a plurality of medium types respectively ⟍ S206

Determine a medium type of the to-be-detected fingerprint based on the fingerprint medium classification vector ⟍ S208

Fig. 2

Input — Feature extraction layer — Classifi-cation layer — Output

Fig. 3

Input | Conv-ReLU | MaxPool | Conv-ReLU | MaxPool | Conv-ReLU | Conv-ReLU | Conv-ReLU | GlobalAvgPool | FC | Softmax | Output

Feature extraction layer    Classification layer

Fig. 4

Fig. 5

Fig. 6

Fingerprint detection apparatus

First obtaining module — 72

First extraction module — 74

First classification module — 76

First determining module — 78

Fig. 7

800

CPU ⌐801

ROM ⌐802

RAM ⌐803

⌐804

⌐805

I/O interface

| Input portion | Output portion | Storage portion | Communi -cation portion | Driver |
|---|---|---|---|---|
| ⌐806 | ⌐807 | ⌐808 | ⌐809 | ⌐810 |

Remova -ble medium ⌐811

Fig. 8

Fig. 9

## INTERNATIONAL SEARCH REPORT

| International application No. |
| --- |
| **PCT/CN2024/114522** |

**A.    CLASSIFICATION OF SUBJECT MATTER**

G06V40/12(2022.01)i

According to International Patent Classification (IPC) or to both national classification and IPC

**B.    FIELDS SEARCHED**

Minimum documentation searched (classification system followed by classification symbols)

IPC:G06V40/-

Documentation searched other than minimum documentation to the extent that such documents are included in the fields searched

Electronic data base consulted during the international search (name of data base and, where practicable, search terms used)

CNABS, CNTXT, ENTXT, DWPI, VEN, ENTXTC, CNKI, 万方, WANFANG, 百度学术, BAIDU SCHOLAR, IEEE: 指纹, 介质, 提取特征, 分类器, 分类网络, 概率, 类型, 种类, 类别, 明胶, 木胶, 黏土, 粘土, 乳胶, 凝胶, 硅胶, 亚克力, 树脂, 橡胶, 石蜡, 多彩泥, 神经网络, 当前时刻, 历史时刻, 融合, 组合, 伪造, 仿冒, 假指, 材料, 假体, fingerprint, medium, extract feature, classifier, probability, kind, type, category, gelatin, wood glue, clay, latex, gel+, silica gel, acrylic, resin, rubber, paraffin, neural network, fake, counterfeit, meterials, prosthesis

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 108520225 A (NANJING UNIVERSITY OF INFORMATION SCIENCE & TECHNOLOGY) 11 September 2018 (2018-09-11) claims 1 and 8, and description, paragraphs 51 and 92 | 1-10 |
| Y | CN 117253262 A (NANJING UNIVERSITY OF INFORMATION SCIENCE & TECHNOLOGY) 19 December 2023 (2023-12-19) claims 1 and 5 | 1-10 |
| A | CN 118262387 A (CHINA THREE GORGES UNIVERSITY) 28 June 2024 (2024-06-28) claims 1-3, and description, paragraph 14 | 1-10 |
| A | CN 109829587 A (ELECTRIC POWER RESEARCH INSTITUTE OF STATE GRID SHANDONG ELECTRIC POWER COMPANY et al.) 31 May 2019 (2019-05-31) entire document | 1-10 |
| A | US 2014294262 A1 (CLARKSON UNIVERSITY) 02 October 2014 (2014-10-02) entire document | 1-10 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 November 2024** | **21 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/114522** |

| **C.** | **DOCUMENTS CONSIDERED TO BE RELEVANT** | |
| --- | --- | --- |
| Category* | Citation of document, with indication, where appropriate, of the relevant passages | Relevant to claim No. |
| A | WO 2022045575 A1 (SAMSUNG ELECTRONICS CO., LTD. et al.) 03 March 2022 (2022-03-03)<br>        entire document | 1-10 |

Form PCT/ISA/210 (second sheet) (July 2022)

# EP 4 730 273 A1

**INTERNATIONAL SEARCH REPORT**
**Information on patent family members**

| Patent document cited in search report | | | Publication date (day/month/year) | Patent family member(s) | | | Publication date (day/month/year) |
|---|---|---|---|---|---|---|---|
| CN | 108520225 | A | 11 September 2018 | CN | 108520225 | B | 27 July 2021 |
| CN | 117253262 | A | 19 December 2023 | CN | 117253262 | B | 30 January 2024 |
| CN | 118262387 | A | 28 June 2024 | None | | | |
| CN | 109829587 | A | 31 May 2019 | None | | | |
| US | 2014294262 | A1 | 02 October 2014 | EP | 2981929 | A1 | 10 February 2016 |
| | | | | EP | 2981929 | B1 | 18 July 2018 |
| | | | | US | 9818020 | B2 | 14 November 2017 |
| | | | | CA | 2944581 | A1 | 09 October 2014 |
| | | | | WO | 2014165579 | A1 | 09 October 2014 |
| | | | | HK | 1221316 | A0 | 26 May 2017 |
| | | | | IN | 201503484 | P2 | 18 March 2016 |
| | | | | HK | 1221316 | A1 | 05 July 2019 |
| WO | 2022045575 | A1 | 03 March 2022 | KR | 20220028559 | A | 08 March 2022 |

Form PCT/ISA/210 (patent family annex) (July 2022)